# EUROPÄISCHE PATENTSCHRIFT

(11) **EP 0 851 978 B1**
(45) Veröffentlichungstag und Bekanntmachung des Hinweises auf die Patenterteilung: **26.04.2000**
(21) Anmeldenummer: 96932558.8
(22) Anmeldetag: 18.09.1996
(51) Int. Cl.: F02M 31/04, F02B 1/12

(54) **STEUEREINRICHTUNG FÜR EINE DIESELBETRIEBENE BRENNKRAFTMASCHINE UND EINE ÖLHEIZUNG**
CONTROL DEVICE FOR A DIESEL-OPERATED INTERNAL-COMBUSTION ENGINE AND OIL-HEATING SYSTEM
DISPOSITIF DE COMMANDE POUR MOTEUR A COMBUSTION INTERNE DIESEL ET POUR SYSTEME DE RECHAUFFAGE DE L'HUILE

(30) Priorität: 20.09.1995 DE 29514973 U
(43) Veröffentlichungstag der Anmeldung: 08.07.1998
(73) Patentinhaber: Gehling, Johannes, 45289 Essen (DE)
(72) Erfinder: Gehling, Johannes, 45289 Essen (DE)
(74) Vertreter: Spalthoff, Adolf, Dipl.-Ing.
(86) Internationale Anmeldenummer: EP9604084
(87) Internationale Veröffentlichungsnummer: WO9711268

(56) Entgegenhaltungen:
- WO-A-92/09803
- DE-A- 3 138 415
- DE-A- 3 641 273
- FR-A- 611 914
- US-A- 1 489 004

## Beschreibung

Die Erfindung bezieht sich auf eine Steuereinrichtung für eine dieselbetriebene Brennkraftmaschine oder für eine Ölheizung nach dem Oberbegriff des Patentanspruchs 1.

Beispielsweise aus der DE-A-3 138 415 ist eine derartige Steuereinrichtung bekannt, bei der bereits eine Mischeinheit, eine Dieselzuleitung und eine Luftzuleitung vorgesehen sind. Des weiteren hat die bekannte Steuereinrichtung eine Heizeinrichtung für die die Luftzuleitung durchströmende Luft.

Im Betrieb einer derartigen dieselbetriebenen Brennkraftmaschine oder einer Ölheizung wird sehr häufig der im Diesel beinhaltete Energieinhalt nicht optimal zur Erzeugung von mechanischer oder thermischer Energie ausgenutzt. Hierdurch wird zum einen der Kraftstoffverbrauch zu hoch, wobei darüber hinaus aufgrund der unvollständigen Verbrennung des Diesels erhöhte Schadstoffemissionen auftreten.

Der Erfindung liegt die Aufgabe zugrunde, eine Steuereinrichtung für eine dieselbetriebene Brennkraftmaschine bzw. für eine Ölheizung zur Verfügung zu stellen, mittels der durch Optimierung des Verbrennungsvorgangs einerseits der Kraftstoffverbrauch und andererseits die Schadstoffemissionen reduziert werden können.

Diese Aufgabe wird erfindungsgemäß durch eine Steuereinrichtung für eine dieselbetriebene Brennkraftmaschine gelöst, die neben den eingangs angegebenen Merkmalen die im kennzeichnenden Teil des Patentanspruchs 1 angegebenen Merkmale aufweist.

Durch den senkrecht zur Strömungsrichtung der Dieselzuleitung angeordneten Luftleitzylinder, längs dessen Mantelfläche die Luft in den die Mischeinheit durchfließenden Dieselstrom eintritt, im Zusammenwirken mit dem Regelkolben, der an dem dieselstromfernen Stirnende des Luftleitzylinders axial verschieblich gehaltert ist, bzw. durch die mögliche Axialverstellung des Regelkolbens kann die Menge der in einen den Luftleitzylinder umgebenden Ringraum und damit in den Dieselstrom eintretenden Luft geregelt werden.

Durch Einsatz derartiger Steuereinrichtungen ergibt sich, je nach Dieselaggregat, eine Kraftstoffeinsparung von zumindest 10 %, wobei sie in den weitaus meisten Fällen deutlich oberhalb von 10 % liegt. Die erfindungsgemäße Steuereinrichtung ist in einfacher Weise und universell zur Nachrüstung stationärer und mobiler Anlagen einsetzbar, insbesondere für Lastkraftwagen, Busse, Personenkraftwagen, Bau- und Landmaschinen, Antriebs- und Versorgungsaggregate, Schiffe, Motorboote etc.

Vorzugsweise hat die erfindungsgemäße Steuereinrichtung zusätzlich eine Steuereinheit, die in der Luftzuleitung stromab der Heizeinrichtung angeordnet ist und mittels der der Luftdurchfluß durch die Luftzuleitung in Abhängigkeit von der Brennkraftmaschinendrehzahl steuerbar ist.

In besonders vorteilhafter Weise hat diese Steuereinheit eine Steuerelektronik, in der Spannungsdifferenzen, die aufgrund von Brennkrafsmaschinendrehzahländerungen an einer Lichtmaschine auftreten, mittels elektronischer Bausteine in Signale umgewandelt werden, mittels denen eine Antriebseinheit eines Reglers oder Ventils zur Durchflußregelung beaufschlagt wird. Durch diese Brennkraftmaschinendrehzahl abhängige Regelung der Luftbeimischung wird die Verbrennung des Diesel/Luft-Gemisches erheblich verbessert. Die elektronischen Bausteine der Steuerelektronik können auf einem hierfür konstruierten Elektronikmodul zusammengefaßt werden.

Der maximale Luftdurchfluß durch die Luftzuleitung ist in besonders einfacher Weise einstellbar, wenn die Begrenzungseinheit als Einstellnadel ausgebildet ist. Im Zusammenwirken zwischen dieser Einstellnadel, mittels der der Strömungsquerschnitt der Luftzuleitung begrenzbar ist, und dem in der Mischeinheit durch den die Mischeinheit durchströmenden Dieselstrom erzeugten Unterdruck ergibt sich somit die maximale Masse der durch die Luftzuleitung in die Mischeinheit zuführbaren Luftmenge.

Für die Anwendung im Zusammenhang mit dieselbetriebenen Brennkraftmaschinen hat sich herausgestellt, daß die Anordnung der erfindungsgemäßen Steuereinrichtung vorteilhaft stromauf der Einspritzpumpe der dieselbetriebenen Brennkraftmaschine gewählt werden sollte.

Im Falle der Anwendung der erfindungsgemäßen Steuereinrichtung im Zusammenhang mit einer Ölheizung sollte eine Anordnung vor einem Ölfilter der Ölheizung gewählt werden.

In besonders einfacher Weise läßt sich die Luft durch die Luftzuleitung in die Mischeinheit einleiten, wenn die Luft mittels des Saugdrucks des die Mischeinheit durchströmenden Diesels in die Mischeinheit eingesaugt wird. Aufgrund der Erhöhung des Saugdrucks mit ansteigendem Dieselstrom ergibt sich darüber hinaus eine quantitative Anpassung der durch die Luftzuleitung in die Mischeinheit eingesaugten Luftmenge an die die Mischeinheit durchströmende Dieselmenge.

Um die Heizeinrichtung, die Steuereinheit und die Begrenzungseinheit gegen Belastungen zu schützen, ist es zweckmäßig, in der Luftzuleitung einen Luftfilter anzuordnen.

Die Heizeinrichtung läßt sich vorteilhaft als elektrisches Heizelement ausbilden.

Als besonders geeigneter Werkstoff für das Gehäuse der erfindungsgemäßen Steuereinrichtung hat sich ein hochwertiger, glasfaserverstärkter Kunststoff herausgestellt, wobei vorzugsweise als Werkstoff auf Technyl A 20 V 25 zurückgegriffen werden kann.

Eine einfache Herstellung der erfindungsgemäßen Steuereinrichtung wird erzielt, wenn die elektronischen Bausteine und die Heizeinrichtung mit dem Gehäuse vergossen werden.

Wenn bei der erfindungsgemäßen Steuereinrichtung in der Luftzuleitung stromauf oder im Bereich der Heizeinrichtung ein Rückschlagventil angeordnet ist, das schließt, wenn durch die Luftzuleitung keine Luft mehr eingesaugt wird, kann bei Motorabschaltungen zuverlässig verhindert werden, daß Diesel durch die Luftzuleitung aus der erfindungsgemäßen Steuereinrichtung austritt.

Bei bestimmten Anwendungsfällen, z.B. bei Benzinmotoren, bei denen Treibstoffpumpen stromauf der Mischeinheit in der Treibstoffzuleitung angeordnet sind, ist es zweckmäßig, wenn die Treibstoffzuleitung erst am in Treibstoff strömungsrichtung stromabwärtigen radialen Endabschnitt des Luftleitzylinders eine Schrägöffnung aufweist, durch die hindurch die entlang der Mantelfläche des Luftleitzylinders strömende Luft in die Treibstoffströmung einsaugbar ist. Da ansonsten der den Luftleitzylinder umgebende Ringraum gegen die Treibstoffzuleitung abgeschlossen ist, wird so zuverlässig verhindert, daß der aufgrund des Betriebs der Treibstoffpumpen unter Druck in die Mischeinheit eintretende Treibstoff an der Mantelfläche des Luftleitzylinders aufwärts aufsteigt.

Im folgenden wird die Erfindung an Hand von Ausführungsformen unter Bezugnahme auf die Zeichnungen näher erläutert.

Es zeigen:
- Figur 1: eine prinzipielle Darstellung einer für dieselbetriebene Brennkraftmaschinen geeigneten Ausführungsform der erfindungsgemäßen Steuereinrichtung;
- Figur 2: eine prinzipielle Darstellung einer für Ölheizungen geeigneten Ausführungsform der erfindungsgemäßen Steuereinrichtung; und
- Figur 3: eine prinzipielle Darstellung einer weiteren Ausführungsform der erfindungsgemäßen Steuereinrichtung im Bereich der Mischeinheit.

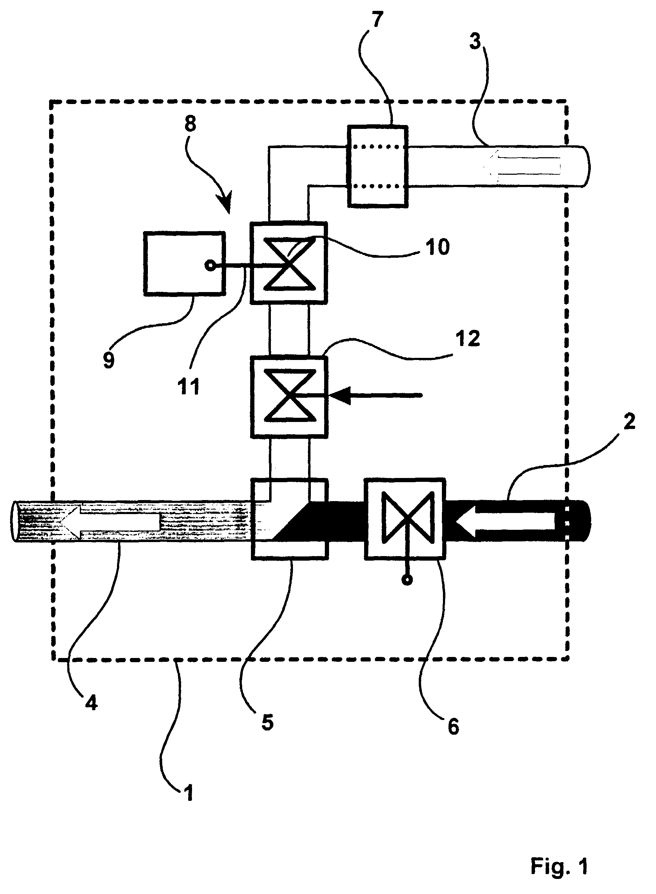

Eine in Figur 1 im Prinzip dargestellte erfindungsgemäße Steuereinrichtung weist ein Gehäuse 1 auf, in das eine Dieselzuleitung 2 und eine Luftzuleitung 3 hineinführen und aus dem eine Kraftstoffgemischleitung 4 herausführt. Dieses Gehäuse ist stromauf einer Einspritzpumpe der dieselbetriebenen Brennkraftmaschine angeordnet.

In dem Gehäuse 1 ist eine Mischeinrichtung 5 angeordnet, die durch die Dieselzuleitung 2 mit Diesel und durch die Luftzuleitung 3 mit Luft versorgt wird und in der Diesel mit Luft zu dem Kraftstoffgemisch mischbar ist. Die Mischeinheit ist so ausgestaltet, daß mittels des Saugdrucks, der an einer in der Figur nicht dargestellten, die Mischeinheit 5 an die Luftzuleitung 3 anschließenden Anschlußstelle herrscht, und durch den Dieselstrom durch die Mischeinheit 5 erzeugt wird, Luft durch die Luftzuleitung 3 in die Mischeinheit 5 eingesaugt wird.

In der Dieselzuleitung 2 ist ein Einsteller 6 angeordnet, mittels dem der Dieseldurchstrom durch die Luftzuleitung 2 und damit durch die Mischeinheit 5 einstellbar ist. Durch diese Einstellung wird auch der die Luft durch die Luftzuleitung 3 in die Mischeinheit 5 ansaugende Unterdruck eingestellt.

In der Luftzuleitung 3 ist eingangsseitig eine Heizeinrichtung 7 angeordnet, die vorzugsweise als elektrisches Heizelement ausgebildet ist und mittels der in die Luftzuleitung 3 eintretende Luft zum einen entfeuchtet und zum anderen auf eine etwa gleichmäßige Temperatur gebracht wird.

Stromab der Heizeinrichtung 7 ist in der Luftzuleitung eine Steuereinheit 8 mit einer Steuerelektronik 9 und einem Regler bzw. Ventil angeordnet.

In der Steuerelektronik 9 werden Spannungsänderungen, die sich im Bereich einer Lichtmaschine aufgrund von Brennkraftmaschinendrehzahländerungen ergeben, in Signale umgewandelt, mittels denen eine Stelleinrichtung 11 betätigbar ist, die das Ventil bzw. den Regler 10 zur Verstellung des Strömungsquerschnitts der Luftzuleitung 3 beeinflußt. Ein Anstieg der Brennkraftmaschinendrehzahl führt somit zu einer etwa proportionalen Vergrößerung des Strömungsquerschnitts der Luftzuleitung 3 und damit zu einer Erhöhung der Zufuhr von Luft zur Mischeinheit 5.

Stromab der Steuereinheit 8 ist in der Luftzuleitung 3 stromauf der Mischeinheit 5 eine Begrenzungseinheit 12 angeordnet, mittels der eine maximale Luftmenge einstellbar ist, die bei einem bestimmten, an der Mischeinheit 5 durch den Durchstrom des Diesels vorgegebenen Saug- bzw. Unterdruck durch die Luftzuleitung 3 in die Mischeinheit 5 einsaugbar ist.

Das Gehäuse 1 besteht, wie bereits erwähnt, aus einem hochwertigen glasfaserverstärkten Kunststoff, zum Beispiel aus Technyl A 20 V 25. Dieser Werkstoff zeichnet sich durch eine hohe Steifigkeit, eine hohe thermische Beständigkeit und eine hohe Flammwidrigkeit aus. Das Gehäuse sowie die in ihm aufgenommenen Bauteile ist somit nahezu völlig wartungsfrei, schlagfest, bruchsicher, schocksicher und temperaturunempfindlich. Für die Versorgung der Steuerelektronik können eine 12V/24V/42V-Gleichspannung oder eine 230V-Wechselspannung eingesetzt werden.

Brennkraftmaschinendrehzahlbedingte Schwankungen im Spannungsversorgungsnetz, vorzugsweise in der Lichtmaschine eines Kraftfahrzeugs, werden durch die Steuerelektronik erfaßt und beeinflussen unmittelbar mittels der Stelleinrichtung 11 der Steuereinheit 8 die Luftbeimischung in der Mischeinheit 5. Hierdurch wird sichergestellt, daß das dieselbetriebene Aggregat in einem weiten Arbeitsbereich stets mit dem optimalen Kraftstoff/Luft-Gemisch versorgt wird.

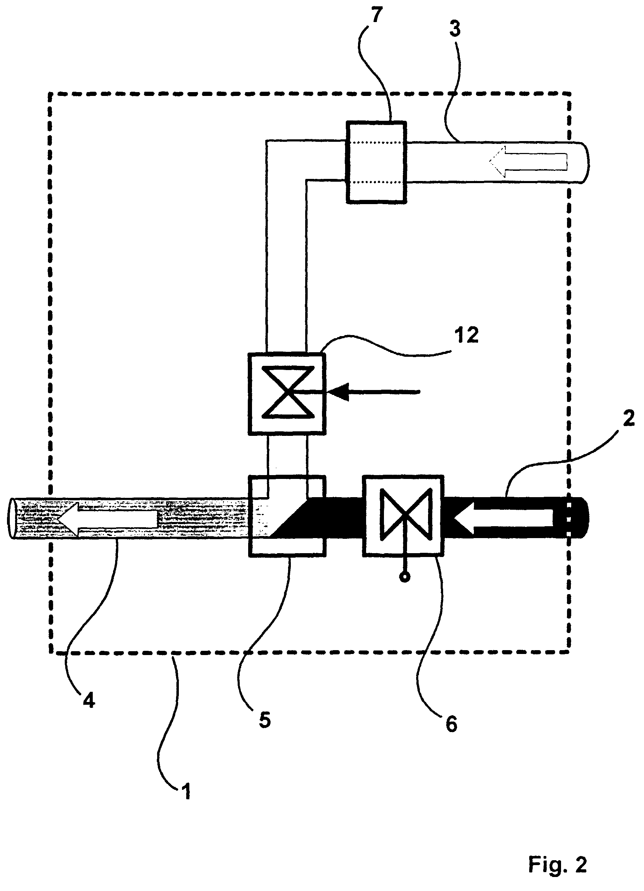

Eine in Figur 2 dargestellte Steuereinrichtung für eine Ölheizung unterscheidet sich von der vorstehend im Zusammenhang mit Figur 1 geschilderten Steuereinrichtung lediglich dadurch, daß einerseits die Kraftstoffgemischleitung 4 nicht zu einer dieselbetriebenen Brennkraftmaschine sondern zum Brennraum einer Ölheizung führt, so daß die Steuereinrichtung in diesem Fall vor einem Ölfilter der Ölheizung angeordnet ist, und andererseits dadurch, daß die für die Ölheizung vorgesehene Steuereinrichtung keine Steuereinheit 8 enthält, mittels der Spannungsschwankungen aufgrund von Brennkraftmaschinendrehzahländerungen berücksichtigt werden. Eine derartige Berücksichtigung ist selbstverständlich im Falle einer Ölheizung nicht erforderlich, da nach einer Einstellung der Ölheizung am Einsteller 6 die Quantität des die Mischeinrichtung 5 durchströmenden Dieselstroms festgelegt ist. Mittels der Begrenzungseinheit 12, die als Einstellnadel od.dgl. ausgebildet sein kann, wird sichergestellt, daß eine maximal vorgebbare Luftmenge, die in die Mischeinheit 5 eintreten kann, nicht überschreitbar ist.

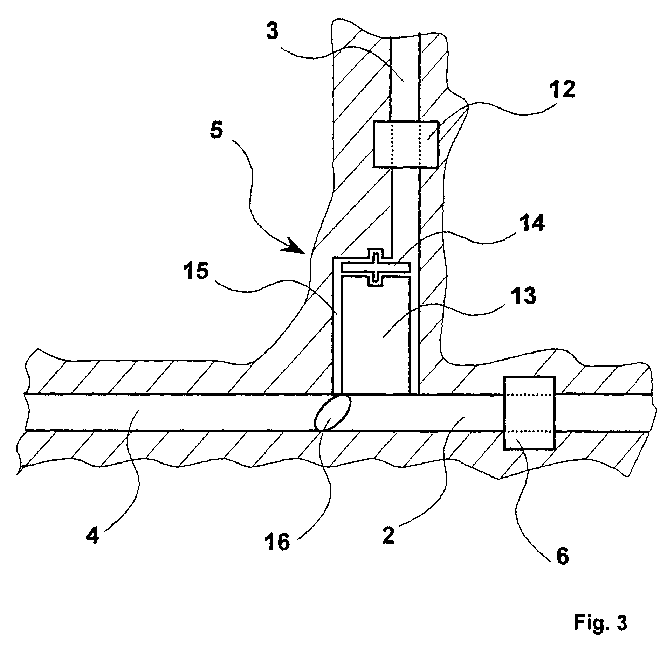

Sofern die Mischeinheit 5 der erfindungsgemäßen Steuereinrichtung so wie in Figur 3 dargestellt ausgebildet ist, kann auf die vergleichsweise aufwendige Steuereinheit 8 verzichtet werden.

Bei der in Figur 3 dargestellten Ausführungsform hat die Mischeinheit 5, die stromab der Begrenzungseinheit 12 in der Luftzuleitung 3 angeordnet ist, einen Luftleitzylinder 13, längs dessen Mantelfläche ein Ringraum 15 ausgebildet ist, durch den die Luft in die die Mischeinheit 5 durchfließende Diesel- bzw. Treibstoffströmung, welche durch die Treibstoffzuleitung 2 in die Mischeinheit 5 eintritt, eingesaugt wird.

Am Übergang zwischen der Luftzuleitung 3 und dem durch den Luftleitzylinder 13 gebildeten Ringraum 15 ist an der treibstoffströmungsfernen Stirnseite des Luftleitzylinders 13 ein Stellkolben 14 axial verschieblich gehaltert. Mittels dieses Stellkolbens 14 ist die Menge der aus der Luftzuleitung 3 in den Ringraum 15 eintretenden Luft regelbar.

Wenn, wie in Figur 3 dargestellt, die Treibstoffzuleitung sich erst an dem in Strömungsrichtung des Treibstoffs gesehen hinteren Endabschnitt des Luftleitzylinders 13 öffnet, wie in Figur 3 durch die Schrägöffnung 16 dargestellt, wird zuverlässig verhindert, daß Treibstoff durch den den Luftleitzylinder 13 umgebenden Ringraum 15 aufsteigt und in die Luftzuleitung 3 eintritt.

In dieser Ausführungsform, bei der die Luftzuleitung die Schrägöffnung 16 am in Strömungsrichtung des Treibstoffs hinteren Endabschnitt des Luftleitzylinders 13 aufweist, kann die erfindungsgemäße Steuereinrichtung auch für benzingetriebene Motoren, bei denen die Treibstoffpumpen stromauf der Mischeinheit 5 angeordnet sind, eingesetzt werden.

## Patentansprüche

1. Steuereinrichtung für eine dieselbetriebene Brennkraftmaschine oder eine Ölheizung, mit einer Mischeinheit (5), in der Diesel und Luft miteinander zu einem Kraftstoffgemisch mischbar sind, einer Dieselzuleitung (2), mittels der Diesel in die Mischeinheit (5) einleitbar ist, einer Luftzuleitung (3), mittels der Luft in die Mischeinheit (5) einleitbar ist, einer Kraftstoffgemischleitung (4), mittels der das Kraftstoffgemisch aus der Mischeinheit (5) in die Brennkraftmaschine oder die Ölheizung einleitbar ist, einem Einsteller (5), mittels dem der Dieseldurchfluß durch die Dieselzuleitung (2) einstellbar ist, und einer Heizeinrichtung (7), mittels der die die Luftzuleitung (3) durchströmende Luft entfeuchtbar und auf eine etwa gleichmäßige Temperatur aufheizbar ist, gekennzeichnet durch eine Begrenzungseinheit (12), die in der Luftzuleitung (3) stromab der Heizeinrichtung angeordnet ist und mittels der ein maximal durch die Luftzuleitung (3) in die Mischeinheit (5) einleitbarer Luftdurchfluß vorgebbar ist, wobei die Mischeinheit (5) einen etwa senkrecht zur Strömungsrichtung der Dieselzuleitung (2) angeordneten Luftleitzylinder (13) aufweist, längs dessen Mantelfläche die Luft in den die Mischeinheit (5) durchfließenden Dieselstrom eintritt und an dessen dieselstromentfernten Stirnende ein Regelkolben (14) axial verschieblich gehaltert ist, mittels dem die Menge der in einen den Luftleitzylinder (13) umgebenden Ringraum (15) eintretenden Luft regelbar ist.

2. Steuereinrichtung für eine dieselbetriebene Brennkraftmaschine, mit einer Steuereinheit (8), die in der Luftzuleitung (3) stromab der Heizeinrichtung (7) angeordnet ist und mittels der der Luftdurchfluß durch die Luftzuleitung (3) in Abhängigkeit von der Brennkraftmaschinendrehzahl steuerbar ist.

3. Steuereinrichtung nach Anspruch 2, bei der die Steuereinheit (8) eine Steuerelektronik (9) aufweist, in der Spannungsdifferenzen, die aufgrund von Brennkraftmaschinendrehzahländerungen an einer Lichtmaschine auftreten, mittels elektronischer Bausteine in Signale umgewandelt werden, mittels denen eine Antriebseinheit (11) eines Reglers oder Ventils (10) zur Durchflußregelung beaufschlagt wird.

4. Steuereinrichtung nach einem der Ansprüche 1 bis 3, bei der die Begrenzungseinheit (12) als Einstellnadel ausgebildet ist.

5. Steuereinrichtung nach einem der Ansprüche 1 bis 4, die stromauf der Einspritzpumpe der Brennkraftmaschine angeordnet ist.

6. Steuereinrichtung nach Anspruch 1 oder 4, die vor einem Ölfilter der Ölheizung angeordnet ist.

7. Steuereinrichtung nach einem der Ansprüche 1 bis 6, bei der die Luft mittels des Saugdrucks des die Mischeinheit (5) durchströmenden Diesels in die Mischeinheit (5) eingesaugt wird.

8. Steuereinrichtung nach einem der Ansprüche 1 bis 7, bei der in der Luftzuleitung (3) ein Luftfilter angeordnet ist.

9. Steuereinrichtung nach einem der Ansprüche 1 bis 8, bei der die Heizeinrichtung (7) als elektrisches Heizelement ausgebildet ist.

10. Steuereinrichtung nach einem der Ansprüche 1 bis 9, deren Gehäuse (1) aus einem hochwertigen glasfaserverstärkten Kunststoff, vorzugsweise Technyl A 20 V 25, hergestellt ist.

11. Steuereinrichtung nach Anspruch 10, bei der die elektronischen Bausteine und die Heizeinrichtung (7) mit dem Gehäuse (1) vergossen sind.

12. Steuereinrichtung nach einem der Ansprüche 1 bis 11, bei der in der Luftzuleitung (3) stromauf oder im Bereich der Heizeinrichtung (7) ein Rückschlagventil angeordnet ist.

13. Steuereinrichtung nach einem der Ansprüche 1 bis 12, bei der die Treibstoffzuleitung (2) erst am in Treibstoffströmungsrichtung stromabwärtigen radialen Endabschnitt des Luftleitzylinders (13) eine Schrägöffnung (16) aufweist, durch die hindurch Luft in die Treibstoffströmung einsaugbar ist.

## Claims

1. A control device for a diesel internal combustion engine or an oil heating system, comprising a mixing unit (5) in which diesel and air are miscible with each other to form a fuel mixture, a diesel supply line (2) by means of which diesel can be passed into the mixing unit (5), an air supply line (3) by means of which air can be passed into the mixing unit (5), a fuel mixture line (4) by means of which the fuel mixture can be passed from the mixing unit (5) into the internal combustion engine or the oil heating system, an adjuster (6) by means of which the flow of diesel through the diesel supply line (2) can be adjusted, and a heating device (7) by means of which the air flowing through the air supply line (3) can be dehumidified and heated to an approximately constant temperature, characterised by a limiting unit (12) which is arranged in the air supply line (3) downstream of the heating device and by means of which it is possible to specify a maximum air flow that can be passed through the air supply line (3) into the mixing unit (5), the mixing unit (5) having an air guide cylinder (13) which is arranged approximately at right angles to the flow direction of the diesel supply line (2), along the outer surface of which air guide cylinder (13) the air enters the stream of diesel flowing through the mixing unit (5) and at the end of which air guide cylinder (13) remote from the stream of diesel a regulating piston (14) is mounted in an axially displaceable manner, by means of which regulating piston (14) the quantity of air entering an annular space (15) surrounding the air guide cylinder (13) can be regulated.

2. A control device for a diesel internal combustion engine, comprising a control unit (8) which is arranged in the air supply line (3) downstream of the heating device (7) and by means of which the flow of air through the air supply line (3) can be controlled in dependence upon the speed of the internal combustion engine.

3. A control device according to claim 2, wherein the control unit (8) comprises control electronics (9) in which potential differences occurring at a dynamo as a result of changes in the speed of the internal combustion engine are converted by means of electronic components into signals by means of which an actuating unit (11) of a regulator or valve (10) is acted upon for flow regulation.

4. A control device according to any one of claims 1 to 3, wherein the limiting unit (12) is constructed as an adjusting needle.

5. A control device according to any one of claims 1 to 4, which is arranged upstream of the injection pump of the internal combustion engine.

6. A control device according to claim 1 or 4, which is arranged upstream of an oil filter of the oil heating system.

7. A control device according to any one of claims 1 to 6, wherein the air is sucked into the mixing unit (5) by means of the suction pressure of the diesel flowing through the mixing unit (5).

8. A control device according to any one of claims 1 to 7, wherein an air filter is arranged in the air supply line (3).

9. A control device according to any one of claims 1 to 8, wherein the heating device (7) is constructed as an electrical heating element.

10. A control device according to any one of claims 1 to 9, the housing (1) of which is manufactured from a high-grade glass-fibre-reinforced plastics material, preferably Technyl A 20 V 25.

11. A control device according to claim 10, wherein the electronic components and the heating device (7) are moulded with the housing (1).

12. A control device according to any one of claims 1 to 11, wherein a non-return valve is arranged in the air supply line (3) upstream or in the region of the heating device (7).

13. A control device according to any one of claims 1 to 12, wherein the fuel supply line (2) has an inclined opening (16) through which air can be sucked into the fuel stream, which inclined opening (16) is situated only at the downstream radial end portion of the air guide cylinder (13) in the direction of fuel flow.

## Revendications

1. Dispositif de commande pour un moteur à combustion interne de type Diesel ou pour un chauffage au mazout, comprenant une unité de mélange (5), dans laquelle le combustible diesel et l'air sont mélangés pour former un mélange combustible, une conduite d'alimentation en combustible diesel (2) à l'aide de laquelle le combustible diesel peut être introduit dans l'unité de mélange (5), une conduite d'alimentation en air (3) à l'aide de laquelle de l'air peut être introduit dans l'unité de mélange (5), une conduite (4) de mélange combustible à l'aide de laquelle le mélange combustible provenant de l'unité de mélange (5) peut être amené au moteur Diesel ou au chauffage à mazout, un moyen de réglage (6) à l'aide duquel le débit de combustible diesel dans la conduite d'alimentation en combustible diesel (2) peut être réglé et un dispositif de chauffage (7) à l'aide duquel l'air circulant dans la conduite d'alimentation en air (3) peut être séché et réchauffé à une température sensiblement constante, caractérisé par une unité de limitation (12) qui est disposée dans la conduite d'alimentation en air (3), en aval du dispositif de chauffage et à l'aide de laquelle un débit d'air maximal introduit dans l'unité de mélange (5) via la conduite d'alimentation en air (3) peut être réglé, l'unité de mélange (5) comportant un cylindre déflecteur (13) qui est disposé sensiblement perpendiculairement à la direction d'écoulement de la conduite d'alimentation en combustible diesel (2), le long de la paroi extérieure duquel l'air arrive dans le flux de combustible diesel traversant l'unité de mélange (5) et à l'extrémité frontale éloignée du flux de combustible diesel duquel un piston de réglage (14) est monté coulissant dans la direction axiale, piston grâce auquel la quantité d'air entrant dans un espace annulaire (15) entourant le cylindre déflecteur (13) peut être réglée.

2. Dispositif de commande pour un moteur à combustion interne de type Diesel, comprenant une unité de commande (8) qui est disposée dans la conduite d'alimentation en air (3), en aval du dispositif de chauffage (7), et à l'aide de laquelle le débit d'air dans la conduite d'alimentation en air (3) peut être commandé en fonction du régime du moteur à combustion interne.

3. Dispositif de commande selon la revendication 2, dans lequel l'unité de commande (8) comporte une électronique de commande (9) dans laquelle des différences de tension qui apparaissent aux bornes d'une génératrice à la suite de variations de régime du moteur à combustion interne sont converties par des composants électroniques en signaux qui alimentent une unité d'entraînement (11) d'un moyen de réglage ou d'une vanne (10) pour la régulation du débit.

4. Dispositif de commande selon une des revendications 1 à 3, dans lequel l'unité de limitation (12) est conformée en pointeau de réglage.

5. Dispositif de commande selon une des revendications 1 à 4, qui est disposé en amont de la pompe d'injection du moteur à combustion interne.

6. Dispositif de commande selon une des revendications 1 ou 4, qui est disposé en amont d'un filtre à combustible du chauffage au mazout.

7. Dispositif de commande selon une des revendications 1 à 6, dans lequel l'air est aspiré dans l'unité de mélange (5) par la pression d'aspiration du combustible diesel qui circule dans ladite unité de mélange (5).

8. Dispositif de commande selon une des revendications 1 à 7, dans lequel un filtre à air est disposé dans la conduite d'alimentation en air (3).

9. Dispositif de commande selon une des revendications 1 à 8, dans lequel le dispositif de chauffage (7) est un élément chauffant électrique.

10. Dispositif de commande selon une des revendications 1 à 9, dont le corps (1) est réalisé en une matière plastique de haute qualité renforcée par fibres de verre, de préférence en Technyl A 20 V 25.

11. Dispositif de commande selon la revendication 10, dans lequel les composants électroniques et le dispositif de chauffage (7) sont intégrés par moulage dans le boîtier (1).

12. Dispositif de commande selon une des revendications 1 à 11, dans lequel un clapet anti-retour est disposé dans la conduite d'alimentation en air (3) en amont du dispositif de chauffage (7) ou dans la région de celui-ci.

13. Dispositif de commande selon une des revendications 1 à 12, dans lequel la conduite d'alimentation en combustible (2) présente une ouverture biaise (16) au niveau du tronçon d'extrémité radial aval, vu dans la direction d'écoulement du combustible, du cylindre déflecteur d'air (13), ouverure à travers laquelle l'air peut être aspiré dans le flux de combustible.
